# EUROPEAN PATENT SPECIFICATION

(11) **EP 4 397 560 B1**
(45) Date of publication and mention of the grant of the patent: **16.09.2026**
(21) Application number: 23150774.0
(22) Date of filing: 09.01.2023
(51) Int. Cl.: B60W 40/10

(54) **DETERMING AIR DRAG OF A VEHICLE USING IMAGES AND A MACHINE LEARNING ALGORITHM**
BESTIMMUNG DES LUFTWIDERSTANDS EINES FAHRZEUGS MIT HILFE VON BILDERN UND EINEM MASCHINELLEN LERNALGORITHMUS
DÉTERMINATION DE LA TRAÎNÉE D'AIR D'UN VÉHICULE À L'AIDE D'IMAGES ET D'UN ALGORITHME D'APPRENTISSAGE AUTOMATIQUE

(43) Date of publication of application: 10.07.2024
(73) Proprietor: VOLVO TRUCK CORPORATION, 405 08 Göteborg (SE)
(72) Inventor: KARLSSON, Robin, 442 75 Lycke (SE); EK, Hampus, 431 34 Mölndal (SE)
(74) Representative: Valea AB

(56) References cited:
- HE PAN ET AL: "Truck Taxonomy and Classification Using Video and Weigh-In Motion (WIM) Technology Final Report", 1 May 2019 (2019-05-01), XP093049629, Retrieved from the Internet <URL:https://fdotwww.blob.core.windows.net/sitefinity/docs/default-source/research/reports/fdot-bdv31-977-81-rpt.pdf> [retrieved on 20230525]
- HARIRAM ADITHYA ET AL: "A Study in Options to Improve Aerodynamic Profile of Heavy-Duty Vehicles in Europe", SUSTAINABILITY, vol. 11, no. 19, 6 October 2019 (2019-10-06), pages 5519, XP093049884, DOI: 10.3390/su11195519
- SAM JACOB JACOB ET AL: "Deep Learning for Real-Time Aerodynamic Evaluations of Arbitrary Vehicle Shapes", ARXIV.ORG, CORNELL UNIVERSITY LIBRARY, 201 OLIN LIBRARY CORNELL UNIVERSITY ITHACA, NY 14853, 12 August 2021 (2021-08-12), XP091032173
- YANG LIQIN ET AL: "Vehicle parts detection based on Faster - RCNN with location constraints of vehicle parts feature point", PROCEEDINGS OF SPIE; [PROCEEDINGS OF SPIE ISSN 0277-786X VOLUME 10524], SPIE, US, vol. 10609, 8 March 2018 (2018-03-08), pages 106091J - 106091J, XP060100831, ISBN: 978-1-5106-1533-5, DOI: 10.1117/12.2287308
- LIU QING ET AL: "Learning Part Segmentation through Unsupervised Domain Adaptation from Synthetic Vehicles", 2022 IEEE/CVF CONFERENCE ON COMPUTER VISION AND PATTERN RECOGNITION (CVPR), IEEE, 18 June 2022 (2022-06-18), pages 19118 - 19129, XP034194955, DOI: 10.1109/CVPR52688.2022.01855

## Description

### TECHNICAL FIELD

The disclosure relates generally to a computer system, a computer-implemented method, a vehicle, a computer program product, a control system and a non-transitory computer-readable storage medium. In particular aspects, the disclosure relates to air drag of a vehicle. The disclosure can be applied in heavy-duty vehicles, such as trucks, buses, marine vessels and construction equipment. Although the disclosure may be described with respect to a particular vehicle, the disclosure is not restricted to any particular vehicle.

### BACKGROUND

There is ongoing work aimed at optimizing and reduce energy consumption of a vehicle. Energy consumption is influenced by a number of parameters, aerodynamic drag or air drag is one of them. Air drag may be described as a force acting in opposition to the relative motion of an object passing through air. Reducing the air drag on the vehicle will reduce the energy required to propel the vehicle. The external design on the vehicle together with all external and/or protruding parts mounted on the vehicle may influence the air drag. Trailer design in combination with how it is mounted to the towing vehicle is another example of what is affecting air drag of the vehicle.
He Pan ET AL: "Truck Taxonomy and Classification Using Video and Weigh-In Motion (WIM) Technology Final Report", May 2019 discloses video processing and machine learning methods to detect and classify trucks.
HARIRAM ADITHYA ET AL: "A Study in Options to Improve Aerodynamic Profile of Heavy-Duty Vehicles in Europe", Sustainability 219 , vol. 11, 5519, 6 October 2019 discloses aerodynamic solutions for tractor and semi-trailer configurations.

It is a strive to develop further improved technology relating to air drag of vehicles.

### SUMMARY

According to a first aspect of the invention as defined in claim 1, there is provided a computer system comprising a processor device configured to inter alia
- obtain at least one image of a vehicle, wherein the at least one image comprises at least one air drag affecting portion of the vehicle affecting the air drag of the vehicle;
- estimate an air drag of the vehicle comprising the at least one air drag affecting portion using a machine learning algorithm;
- identify the at least one air drag affecting portion in the at least one image; and to
- estimate an impact that the at least one air drag affecting portion has on the vehicle's air drag and energy consumption.

The first aspect of the disclosure may seek to improve handling of air drag and energy consumption of a vehicle. A technical benefit may include that handling of air drag and energy consumption of a vehicle is improved. Another technical benefit may be that it enables to identify air drag problems and improves energy efficiency of the vehicle. Using a machine learning algorithm provide an estimate of the air drag that is accurate. Furthermore, the estimation of the air drag is performed fast thanks to the machine learning algorithm.

According to a second aspect of the invention as defined in claim 2, there is provided a computer-implemented method, comprising inter alia:
- obtaining, by a processor device of a computer system, at least one image of a vehicle, wherein the at least one image comprises at least one air drag affecting portion of the vehicle affecting the air drag of the vehicle;
- estimating, by the processor device, an air drag of the vehicle comprising the at least one air drag affecting portion using a machine learning algorithm;
- identifying, by the processor device, the at least one air drag affecting portion in the at least one image; and
- estimating, by the processor device, an impact that the at least one air drag affecting portion has on the vehicle's air drag and energy consumption.

Technical benefits of the second aspect of the disclosure are largely analogous to the technical benefits of the first aspect of the disclosure. It shall also be noted that all examples of the second aspect of the disclosure are combinable with all embodiments of the first aspect of the disclosure, and vice versa.

In some examples, the method may comprise:
- determining, by the processor device, a change in vehicle setup based on the impact that the at least one air drag affecting portion has on the vehicle's air drag and energy consumption, wherein the determined change is associated with a reduced air drag and reduced energy consumption.
A technical benefit may include that the air drag and energy consumption is reduced. A change in vehicle setup may be to replace the air drag affecting portion with another similar air drag affecting portion that has less impact on the air drag and energy consumption than the current air drag affecting portion, it may be to completely remove the air drag affecting portion, it may be to change a position of the air drag affecting portion etc.

In some examples, the machine learning algorithm may be pre-trained using data and other images of other vehicles with different vehicle setup in combination with known air drag. A technical benefit may include that the estimated air drag has high accuracy since data and other images of other vehicles with different vehicle setup is used in combination with known air drag.

In some examples, the method may comprise:
- determining, by the processor device, that quality of the at least one image is below a quality threshold or that it has reached or is above the quality threshold.
A technical benefit may include that image(s) of low quality, i.e. quality below the quality threshold, may be discarded or their quality may be improved before being used in the estimation. Possible errors in these images will be removed before being used in the estimation such that errors will not affect the estimation. The estimation will therefore be of high quality and it will be reliable.

In some examples, the method may comprise:
- when a plurality of images is obtained, determining, by the processor device, that a quantity of the plurality of images is below a quantity threshold or that it has reached or is above the quantity threshold.
A technical benefit may include that the estimation will only be performed with a sufficient number of images, i.e., when the quantity is above the quantity threshold. If the quantity is below the quantity threshold, additional images will be obtained. Thus, errors in the estimation due to a quantity being below the quantity threshold will be removed or at least reduced. Ensuring that the quantity is at or above the quantity threshold increases the quality, accuracy and reliability of the estimation.

In some examples, the method may comprise:
- Providing, by the processor device, information associated with the estimated impact and estimated air drag to a display unit.
A technical benefit may include that a user or operator of the vehicle may easily obtain the information and take the necessary actions to handle the air drag.

In some examples, the at least one image may be obtained from an image capturing device located offboard the vehicle. For example, the image capturing device may be comprised in a user equipment, e.g., a mobile phone, a tablet computer etc., used by a user or operator of the vehicle. When using an image capturing device located offboard the vehicle, an image of the whole vehicle may be obtained and possibly also in one image, as compared to image capturing devices located onboard the vehicle. An image capturing device located offboard the vehicle is easy to use and access.

According to a third aspect of the disclosure, there is provided a vehicle comprising a processor device to perform the method of the second aspect. Technical benefits of the third aspect of the disclosure are largely analogous to the technical benefits of the first aspect and the second aspect of the disclosure. It shall also be noted that all examples of the third aspect of the disclosure are combinable with all embodiments of the first aspect and the second aspect of the disclosure, and vice versa.

According to a fourth aspect of the disclosure, there is provided a computer program product comprising program code for performing, when executed by a processor device, the method of the second aspect. Technical benefits of the fourth aspect of the disclosure are largely analogous to the technical benefits of the first, second and the third aspect of the disclosure. It shall also be noted that all examples of the fourth aspect of the disclosure are combinable with all embodiments of the first, second and the third aspect of the disclosure, and vice versa.

According to a fifth aspect of the disclosure, there is provided a control system comprising one or more control units configured to perform the method of the second aspect. Technical benefits of the fifth aspect of the disclosure are largely analogous to the technical benefits of the first, second, third and the fourth aspect of the disclosure. It shall also be noted that all examples of the fifth aspect of the disclosure are combinable with all embodiments of the first, second, third and the fourth aspect of the disclosure, and vice versa.

According to a sixth aspect of the disclosure, there is provided a non-transitory computer-readable storage medium comprising instructions, which when executed by a processor device, cause the processor device to perform the method of the second aspect. Technical benefits of the sixth aspect of the disclosure are largely analogous to the technical benefits of the first, second, third, fourth and the fifth aspect of the disclosure. It shall also be noted that all examples of the fifth aspect of the disclosure are combinable with all embodiments of the first, second, third, fourth and the fifth aspect of the disclosure, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary illustration of a vehicle, according to one example.
**FIG. 2** is an exemplary illustration of a method, according to one example.
**FIG. 3** is an exemplary illustration of a method, according to one example.
**FIG. 4** is an exemplary illustration of a method, according to one example.
**FIG. 5** is an exemplary flow chart illustrating a method, according to one example.
**FIG. 6** is a schematic diagram of an exemplary computer system for implementing examples disclosed herein, according to one example.

### DETAILED DESCRIPTION

Aspects set forth below represent the necessary information to enable those skilled in the art to practice the disclosure.

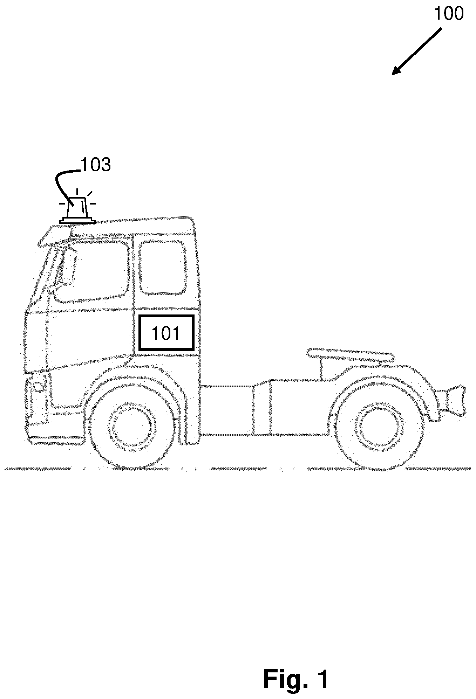

**FIG. 1** is an exemplary illustration of a vehicle **100.** The vehicle **100** may be a heavy-duty vehicle, such as truck, bus, marine vessel and construction equipment. Although the disclosure may be described with respect to a particular vehicle **100,** the disclosure is not restricted to any particular vehicle.

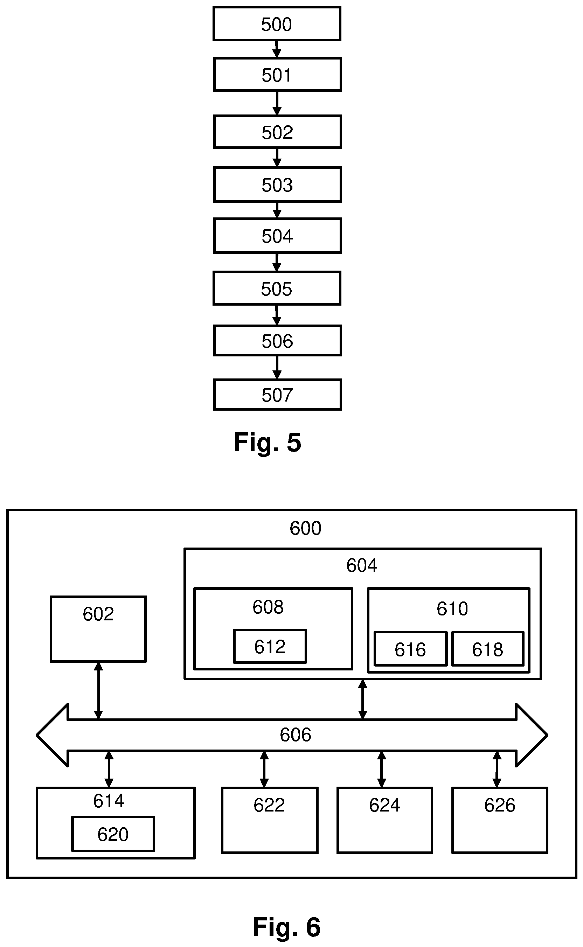

The vehicle **100** may comprise a control unit **101.** The control unit **101** may be comprised in a control system, and the control system may comprise one or more control units **101.** The control unit **101** may comprise a processor device **602** (ref. number **602** is found in **FIG. 6****),** or the control unit **101** may be the processor device **602.** The control system may be a computer system **600** (ref. number **600** is found in **FIG. 6****)** comprising the processor device **602.**

The control unit **101** may be completely comprised in the vehicle **100,** as exemplified in **FIG. 1****.** A first part of the control unit **101** may be comprised in the vehicle **100** and a second part of the control unit **101** may be located offboard the vehicle **100,** e.g. in a central server, in a cloud server etc. The control unit **100** may be completely comprised in an offboard location, e.g., a central server, a cloud server etc.

The vehicle **100** comprises at least one air drag affecting portion **103.** The term at least one refers to that the vehicle **100** comprises one or more air drag affection portions **103,** i.e., that the vehicle **100** comprises *n* number of air drag affection portions **103,** where *n* is a positive integer. For the sake of simplicity, the term air drag affection portion **103** may be used herein when referring to at least one air drag affection portion **103.**

The air drag affecting portion **103** may be of any suitable type. **FIG. 1** illustrates an example where the air drag affecting portion **103** is a lamp mounted on top of the outside of the vehicle cabin. In another example, the air drag affecting portion **103** may be an air deflector, it may be a trailer connected to a towing vehicle, side mirrors, signal horns, warning lights or any other suitable air drag affection portion. The distance between the towing vehicle and the trailer may affect the air drag, the size and/or shape of the trailer may affect the air drag etc. The air drag affecting portion **103** may be located at any suitable position on the vehicle **100,** i.e., on the outside of the vehicle **100.**

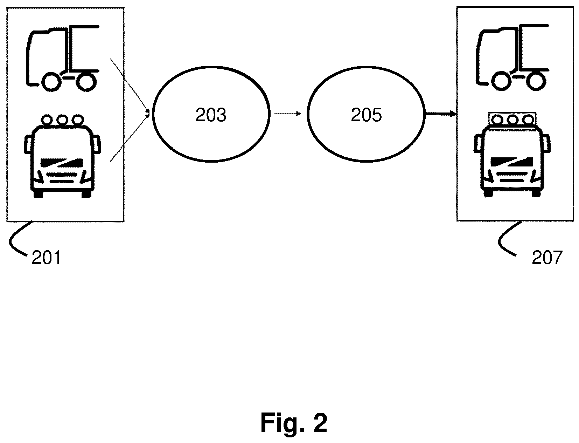

**FIG. 2****,** **FIG. 3** and **FIG. 4** are exemplary illustrations of a method, according to one example. The method comprises at least one of the following steps, which steps may be performed in any suitable order than described below:

Step **201:** At least one image of the vehicle **100** is obtained. The image may be captured by an image capturing device (not shown in **FIG. 2****)** located offboard the vehicle 100. The image may be provided from the image capturing device to the control unit **103** and/or the processor device **602.** The image may be provided from the image capturing device upon request from the control unit **103** and/or the processor device **602,** it may be provided at regular time intervals, or it may be provided when an image has been captured.

The image capturing device may be any suitable device arranged to capture an image, e.g., still and/or moving images. The image capturing device may be comprised in a user equipment such as a mobile phone, a tablet computer or any other handheld unit, it may be comprised in a drone, it may be comprised in a stationary unit mounted on e.g., a rack, a building etc.

The term at least one image refers to that there may be one or more images captured by the image capturing device and provided to the control unit **103** and/or the processor device **602,** i.e., *m* number of images, where *m* is a positive integer.

The at least one image is an image of substantially the whole vehicle **100.** The term substantially refers to that the images if of the whole vehicle **100** possibly with some tolerance. The at least one image may be taken from any suitable angle of the vehicle **100.** The at least one image may illustrate the front of the vehicle **100,** the side of the vehicle etc. In some examples, there may be one image of the front of the vehicle **100** and another image of the side of the vehicle **100,** as exemplified in **FIG. 2****.**

Step **203:** Image pre-processing may be performed. The pre-processing may be performed by the control unit **103** and/or the processor device **602.** The pre-processing may comprise to check if the quality of the at least one image is sufficient, i.e., to determine whether the quality of the at least one image is below a quality threshold or that it has reached or is above the quality threshold. When the quality is below the quality threshold, then the quality may be determined to be not sufficient or not good enough to be used in the next step. When the quality has reached or is above the quality threshold, then the quality may be determined to be sufficient or good enough to be used in the next steps. The quality of the image may be determined based on one or more of: the lighting conditions in the image, e.g. dynamic range, sharpness, noise, distortion, information indicating whether or not the complete vehicle **100** is contained within the image, information indicating whether or not it is possible to identify the vehicle **100** within the image, or any other suitable information.

The quality threshold may be predetermined, or it may be dynamically set and possibly changed during the performance of the method described herein.

When the quality is below the quality threshold, the control unit **103** and/or the processor device **602** may determine to improve the quality of the image or to discard the image having too low quality. The quality of the image may be improved using any suitable image processing methods. After quality improvement has been made, the quality of the improved image may again be compared to the quality threshold.

When a plurality of images of the vehicle **100** is obtained, then it may be checked if the quantity of the plurality of images is below a quantity threshold or if it has reached or is above the quantity threshold. When the quantity is below the quantity threshold, then the control unit **103** and/or the processor device **602** may determine that more images need to be captured, and send a request to the image capturing device to take more images. The request may comprise information about how many images the image capturing device should take. The image capturing device consequently takes more images and provides them to the control unit **103** and/or the processor device **602.** If the request does not comprise information about how many images to be taken, the image processing device may take a predetermined number of images or an arbitrary number of images. When the additional images have been obtained by the control unit **103** and/or the processor device **602,** the number of images may again be compared to the quantity threshold. This may be performed in a loop until a sufficient number of images of the vehicle **100** has been obtained.

The quantity threshold may be predetermined, or it may be dynamically set and possibly changed during the performance of the method described herein. For example, with only one image it may be difficult to measure distance to and between objects making it much more difficult to estimate the air drag. Also, the viewing angle affects the results. If all images are taken from the exact same position with the same angle, it may not be possible to reconstruct the image in 3D and therefor the estimation will not be as accurate. Depending on the difference between viewing angle and how much of the vehicle **100** is captured in each image, the number of images required may vary. It may probably be possible to do a simple prediction with only one image, but the uncertainties may be much higher.

Step **205:** A machine learning algorithm may be applied on the at least one images to estimate the air drag of the vehicle **100,** i.e., the air drag of the whole vehicle **100.** Consequently, the machine learning algorithm is implemented and executed on the control unit **103** and/or the processor device **602.**

The machine learning algorithm may be pre-trained using data and other images of other vehicles **100** with different vehicle setup in combination with known air drag.

The input to the machine learning algorithm may be historic data, e.g., historic or previous estimations of air drag of the vehicle **100** or of other vehicles **100.** The output of the machine learning algorithm is the estimated air drag of the vehicle **100.**

The machine learning algorithm may be based on deep learning and, for image processing, convolutional neural networks.

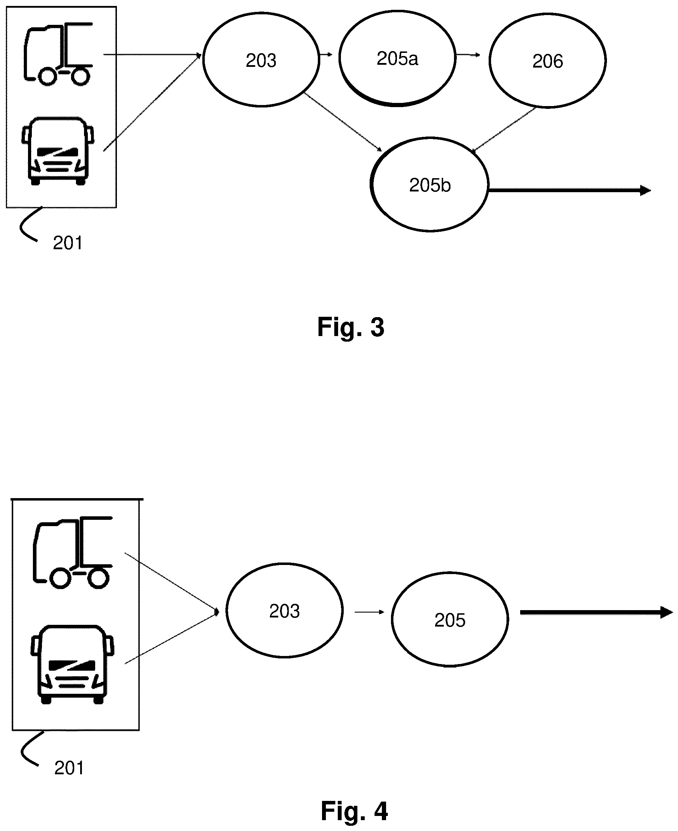

As exemplified in **FIG. 3****,** there may be two machine learning algorithms, or the algorithm may comprise two machine learning sub-algorithms. In the following, these two algorithms will be referred to as a first machine learning algorithm **205a** and a second machine learning algorithm **205b.** The two machine learning algorithms **205a, 205b** may be performed in parallel and at the same time, or they may be performed one after the other. Input to the two machine learning algorithms is the at least one images of the vehicle **100,** possibly after it has been pre-processed in step **203.**

The first machine learning algorithm **205a** may be referred to as a classification algorithm. The first machine learning algorithm **205b** is arranged to, based on the at least one image of the vehicle **100,** classify the vehicle **100** in at least one vehicle class and to point it out in an air drag resistance database **206.** The first machine learning algorithm **205b** is arranged to, based on the at least one image of the vehicle **100,** classify the at least one air drag affecting portion **103** in the air drag resistance database **206.** The air drag resistance database **206** comprises air drag resistance data. The air drag resistance data is associated with one particular vehicle **100** or for a plurality of vehicles **100,** and/or with at least one air drag portions **103.** There may be one air drag resistance database **206** comprising air drag resistance data for both the vehicle **100** and the at least one air drag portion **103,** or there may be a first air drag resistance database comprising air drag resistance data for the vehicle **100** and a second air drag resistance database comprising air drag resistance data for the at least one air drag portion **103.**

The classes may be based on any suitable vehicle parameter, for example chassis type, vehicle configuration, vehicle shape, at least one air drag affecting portion 103 etc. The at least one air drag affecting portion **103** may be described as outside mounted equipment which is mounted on the outside of the vehicle and may be for example roof mounted headlights, wind advisor etc. There may be a vehicle class in which the vehicle 100 is classified, and an air drag affection portion class in which the at least one air drag affecting portion **103** is classified. There may be predefined classes, and/or the classes may be dynamically created. Completely new vehicles and/or at least one air drag affecting portion **103** may be classified in a class which is nearest or a most similar class. For example, if a new vehicle **100** and/or a new at least one air drag affecting portion **103** does not belong to a predefined class, then the new vehicle **100** and/or new at least one air drag affecting portion **103** may be determined to belong 70% to a first class, 25% to a second class and 5% to a third class.

The air drag resistance database **206** may be predetermined, i.e., it may be created before the first machine learning algorithm **205a** is executed for the first time. Data comprised in the air drag resistance database **206** may be obtained from already existing sources together with creation of new data from for example wind tunnel testing, but also synthetic data from more advanced computer simulations. The air drag resistance database **206** may be continuously updated, i.e., the air drag resistance database **206** may not be static but rather built upon during some time.

The second machine learning algorithm **205b** is arranged to enhance the air drag resistance data from the air drag resistance database **206** by combing that data together with the at least one image of the vehicle **100.** The output of the second machine learning algorithm **205** is the air drag resistance value of the whole vehicle **100,** including the at least one air drag portion **103.**

The air drag resistance data is enhanced in that the air drag resistance database **206** is able to return an air resistance for a combination of vehicle **100** and air drag affecting portions **103.** If the given combination of vehicle **100** and air drag affecting portion **103** is not comprised in the air drag resistance database **206,** the air drag resistance database **206** may offer to return its closest match. By having a Machine Learning (ML) algorithm trained on the air drag resistance data in the air drag resistance database **206,** the information in the air drag resistance database **206** is generalized so that the ML algorithm may give an estimation of the air drag even for a combination of vehicle **100** and air drag affecting portion **103 it** has not seen before. The estimate may be better than just returning the closest match from the air drag resistance database **206.**

The machine learning algorithm may be described as a type of artificial intelligence (AI). The machine learning algorithm automatically learns and improves from previous executions of the algorithm without being explicitly instructed to do so. The machine learning algorithm uses historic data as input to provide new output data. A machine learning algorithm may be described as aiming to imitate the human brain when it comes to processing of data. The machine learning algorithm may generalize, e.g., it may perform predictions on air drag affection portions **103** that it previously has not handled or made predictions on.

A technical benefit of using a machine learning algorithm is that the accuracy of the estimation is improved, as compared to not using the machine learning algorithm. A machine learning algorithm is an efficient algorithm, its time consumption is low, and it provides outputs and results of high accuracy, i.e., accuracy above a threshold.

Step **207:** The control unit **103** and/or the processor device **602** estimates an impact that the at least one air drag affecting portion **103** has on the vehicle's air drag and energy consumption. The impact may be estimated using a machine learning algorithm.

The input to step **207** may be the air drag resistance value, as exemplified in **FIG. 3** and **FIG.4****.** The energy may be electric energy, it may be fuel such as diesel, petrol, it may be gas, it may be fuel cell energy, or any other suitable energy type arranged to power the vehicle **100** etc. In addition to the energy consumption, the at least one air drag affection portion **103** may have an impact on for example urea that is added to the fuel.

As exemplified in **FIG. 2****,** the impact may comprise to identify the disturbance, i.e., to identify the air drag affection portion **103.** The impact may comprise to determine a potential energy saving, for example measured in %, that may be obtained by making changes to the identified at least one air drag affecting portion **103,** e.g., removing the air drag affecting portion **103,** replacing it with another and less air drag influencing portion etc.

Information associated with the estimated impact and estimated air drag may be provided to a display unit to viewed by a user or an operator. The display unit may be a standalone display unit, or it may be comprised in any suitable unit, e.g. a user equipment such as a mobile phone, a tablet computer or any other suitable handheld unit, it may an onboard vehicle display, it may be comprised in a stationary computer located at a central location etc.

**FIG. 2** and **FIG. 4** may be summarized as follows:
- At least one image is obtained from the image capturing device, step **201.**
- The at least one image may be pre-processed and evaluated if quality and quantity is good enough, step **203.**
- The at least one image, possibly pre-processed, are fed to the machine learning algorithm which makes an identification of disturbances, i.e., it identifies the air affecting portions **103,** step **205.** The machine learning algorithm is pre trained on images from different vehicle combinations in combination with known air drag resistance values. The data is then used together with an estimator to give the energy consumption impact.
- The at least one image is brought back to the user with identified areas and information about potential savings if corrected, step **207.**

**FIG. 3** may be summarized as follows:
- At least one image is obtained from the image capturing device, step **201.**
- The at least one image, possibly pre-processed, are fed to the machine learning algorithm which makes an identification of disturbances, i.e., it identifies the air affecting portions **103,** step **205.** The machine learning algorithm is pre-trained on images from different vehicle combinations in combination with known air drag resistance values. The data is then used together with an estimator to give the energy consumption impact.
- The first machine learning algorithm, i.e., the classification algorithm, may classify the vehicle **100** and points it out in the air drag resistance database, step **205b.**
- The second machine learning algorithm may enhance the value from the air drag resistance database by combing that data together with the image input, step **205b.**

**FIG. 5** is an exemplary flow chart illustrating a method, according to one example. The method may be a computer-implemented method. The method may be performed by the control unit **101** or a control system. The method may be performed by the processor device **602** of the computer system **600.** The method comprises at least one following steps, which steps may be performed in any suitable order than described below:

Step **500:** This step corresponds to step **201** in **FIG. 2****.** The control unit **101,** the control system or the processor device 602 obtains, at least one image of a vehicle **100.** The at least one image comprises at least one air drag affecting portion **103** of the vehicle **100** affecting the air drag of the vehicle **100.** The at least one image may be obtained from an image capturing device located offboard the vehicle **100.**

Step **501:** The control unit **101,** the control system or the processor device **602** may determine that quality of the at least one image is below a quality threshold or that it has reached or is above the quality threshold.

Step **502:** When a plurality of images is obtained, the control unit **101,** the control system or the processor device **602** may determine that a quantity of the plurality of images is below a quantity threshold or that it has reached or is above the quantity threshold.

Step **503:** This step corresponds to steps **205, 205a, 205b** in **FIG. 2****.** The control unit **101,** the control system or the processor device **602** estimates an air drag of the vehicle **100** comprising the at least one air drag affecting portion **103** using the machine learning algorithm.

The machine learning algorithm may be pre-trained using data and other images of other vehicles **100** with different vehicle setup in combination with known air drag.

Step **504:** This step corresponds to step **207** in **FIG. 2****.** The control unit **101,** the control system or the processor device 602 identifies the at least one air drag affecting portion **103** in the at least one image.

Step **505:** This step corresponds to step **207** in **FIG. 2****.** The control unit **101,** the control system or the processor device **602** estimates an impact that the at least one air drag affecting portion **103** has on the vehicle's air drag and energy consumption.

Step **506:** The control unit **101,** the control system or the processor device **602** may determine a change in vehicle setup based on the impact that the at least one air drag affecting portion **103** has on the vehicle's air drag and energy consumption. The determined change may be associated with a reduced air drag and reduced energy consumption.

Step **507:** The control unit **101,** the control system or the processor device **602** may provide information associated with the estimated impact and estimated air drag to a display unit

A computer system **600** comprising a processor device **602** configured to:
- obtain at least one image of a vehicle **100,** wherein the at least one image comprises at least one air drag affecting portion **103** of the vehicle **100** affecting the air drag of the vehicle **100;**
- estimate an air drag of the vehicle **100** comprising the at least one air drag affecting portion **103** using a machine learning algorithm;
- identify the at least one air drag affecting portion **103** in the at least one image; and to
- estimate an impact that the at least one air drag affecting portion **103** has on the vehicle's air drag and energy consumption.

The vehicle **100** comprises the control unit **101,** the control system or the processor device **602** to perform the method described herein.

A computer program product comprises program code for performing, when executed by the control unit **101,** the control system or the processor device **602,** the method described herein.

The control system comprises one or more control units **101** configured to perform the method described herein.

A non-transitory computer-readable storage medium comprises instructions, which when executed by the control unit **101,** the control system or the processor device **602,** cause the control unit **101,** the control system or the processor device **602,** to perform the method described herein.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include a processor device **602** (may also be referred to as a control unit), a memory **604,** and a system bus **606.** The computer system **600** may include at least one computing device having the processor device **602.** The system bus **606** provides an interface for system components including, but not limited to, the memory **604** and the processor device **602.** The processor device **602** may include any number of hardware components for conducting data or signal processing or for executing computer code stored in memory **604.** The processor device **602** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processor device **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with a processor device **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program product **620** stored on a transitory or non-transitory computer-usable or computer-readable storage medium (e.g., single medium or multiple media), such as the storage device **614,** which includes complex programming instructions (e.g., complex computer-readable program code) to cause the processor device **602** to carry out the steps described herein. Thus, the computer-readable program code can comprise software instructions for implementing the functionality of the examples described herein when executed by the processor device **602.** The processor device **602** may serve as a controller or control system for the computer system **600** that is to implement the functionality described herein.

The computer system **600** also may include an input device interface **622** (e.g., input device interface and/or output device interface). The input device interface **622** may be configured to receive input and selections to be communicated to the computer system **600** when executing instructions, such as from a keyboard, mouse, touch-sensitive surface, etc. Such input devices may be connected to the processor device **602** through the input device interface **622** coupled to the system bus **606** but can be connected through other interfaces such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may also include a communications interface **626** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Summarized, many users and operators of vehicle **100** are not aware of the aerodynamic abilities of their vehicle **100.** The vehicle **100** may have a poor setup or modifications may have been done that have a severe impact on energy consumption by increased air drag. The present disclosure enables users and operators of the vehicle **100** to identify air drag problems and improve energy efficiency. Today, air drag data may be considered from the delivery state of the vehicle **100,** not taking modifications and trailer into consideration. Air drag is an important factor for energy consumption, especially for long haul applications. Today, no tools exist for the users or operators, except general know how acquired through trainings or information sheets.

Furthermore, today it may be challenging to get a good estimate of a vehicle's air drag resistance without using costly and time-consuming wind tunnel testing. Only using known stock data for estimation of air drag do not consider anomality's/modifications.

The present disclosure simplifies the process of estimating air drag while improving the accuracy compared to only using stock data.

The present disclosure utilizes machine learning in combination with at least one images from an image capturing device and/or together with existing and collected data. Given the at least one image of the vehicle **100,** it is possible to point out critical elements, i.e., at least one air drag affecting portions **103,** of the vehicle **100** and also give an estimate on potential energy savings.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (600) comprising a processor device (602) configured to:
obtain at least one image of a vehicle (100), wherein the at least one image comprises at least one air drag affecting portion (103) of the vehicle (100) affecting the air drag of the vehicle (100);
estimate an air drag of the vehicle (100) comprising the at least one air drag affecting portion (103) using a machine learning algorithm;
identify the at least one air drag affecting portion (103) in the at least one image;
combine, by the processor device (602), air drag resistance data for the vehicle (100) and air drag resistance data for the at least one air drag affecting portion (103), the air drag resistance data being determined using the machine learning algorithm and the at least one image; and to
estimate an impact that the at least one air drag affecting portion (103) has on the vehicle's air drag and energy consumption based on the combined air drag resistance data.

2. A computer-implemented method, comprising:
*obtaining* (201, 500), by a processor device (602) of a computer system (600), at least one image of a vehicle (100), wherein the at least one image comprises at least one air drag affecting portion (103) of the vehicle (100) affecting the air drag of the vehicle (100);
*estimating* (205, 205a, 205b, 503), by the processor device (602), an air drag of the vehicle (100) comprising the at least one air drag affecting portion (103) using a machine learning algorithm;
*identifying* (207, 504), by the processor device (602), the at least one air drag affecting portion (103) in the at least one image;
*combining,* by the processor device (602), air drag resistance data for the vehicle (100) and air drag resistance data for the at least one air drag affecting portion (103), the air drag resistance data being determined using the machine learning algorithm; and
*estimating* (207, 505), by the processor device (602), an impact that the at least one air drag affecting portion (103) has on the vehicle's air drag and energy consumption based on the combined air drag resistance data.

3. The computer-implemented method of claim 2, comprising:
*determining* (506), by the processor device (602), a change in vehicle setup based on the impact that the at least one air drag affecting portion (103) has on the vehicle's air drag and energy consumption, wherein the determined change is associated with a reduced air drag and reduced energy consumption.

4. The computer-implemented method of any of claims 2-3, wherein the machine learning algorithm is pre-trained using data and other images of other vehicles (100) with different vehicle setup in combination with known air drag.

5. The computer-implemented method of any of claims 2-4, further comprising:
*determining* (501), by the processor device (602), that quality of the at least one image is below a quality threshold or that it has reached or is above the quality threshold.

6. The computer-implemented method of any of claims 2-5, further comprising:
when a plurality of images is obtained, *determining* (502), by the processor device (602) that a quantity of the plurality of images is below a quantity threshold or that it has reached or is above the quantity threshold.

7. The computer-implemented method of any of claims 2-6, comprising:
*providing* (507), by the processor device (602), information associated with the estimated impact and estimated air drag to a display unit.

8. The computer-implemented method of any of claims 2-7, wherein the at least one image is obtained from an image capturing device located offboard the vehicle (100).

9. A vehicle (100) comprising a processor device (602) to perform the method of any of claims 2-8.

10. A computer program product comprising program code for performing, when executed by a processor device (602), the method of any of claims 2-8.

11. A control system comprising one or more control units (101) configured to perform the method of any of claims 2-8.

12. A non-transitory computer-readable storage medium comprising instructions, which when executed by a processor device (602), cause the processor device (602) to perform the method of any of claims 2-8.

## Patentansprüche

1. Computersystem (600), umfassend eine Prozessorvorrichtung (602), die konfiguriert ist zum:
Erhalten mindestens eines Bildes eines Fahrzeugs (100), wobei das mindestens eine Bild mindestens einen luftwiderstandsbeeinflussenden Abschnitt (103) des Fahrzeugs (100) umfasst, der den Luftwiderstand des Fahrzeugs (100) beeinflusst;
Schätzen eines Luftwiderstands des Fahrzeugs (100), umfassend den mindestens einen luftwiderstandsbeeinflussenden Abschnitt (103), unter Verwendung eines maschinellen Lernalgorithmus;
Identifizieren des mindestens einen luftwiderstandsbeeinflussenden Abschnitts (103) in dem mindestens einen Bild;
Kombinieren, durch die Prozessorvorrichtung (602), von Luftwiderstandsdaten für das Fahrzeug (100) und Luftwiderstandsdaten für den mindestens einen luftwiderstandsbeeinflussenden Abschnitt (103), wobei die Luftwiderstandsdaten unter Verwendung des maschinellen Lernalgorithmus und des mindestens einen Bildes bestimmt werden;
und zum
Schätzen einer Auswirkung, die der mindestens eine luftwiderstandsbeeinflussende Abschnitt (103) auf den Luftwiderstand und den Energieverbrauch des Fahrzeugs hat, basierend auf den kombinierten Luftwiderstandsdaten.

2. Computerimplementiertes Verfahren, umfassend:
*Erhalten* (201, 500), durch eine Prozessorvorrichtung (602) eines Computersystems (600), mindestens eines Bildes eines Fahrzeugs (100), wobei das mindestens eine Bild mindestens einen luftwiderstandsbeeinflussenden Abschnitt (103) des Fahrzeugs (100) umfasst, der den Luftwiderstand des Fahrzeugs (100) beeinflusst;
*Schätzen* (205, 205a, 205b, 503), durch die Prozessorvorrichtung (602), eines Luftwiderstands des Fahrzeugs (100), umfassend den mindestens einen luftwiderstandsbeeinflussenden Abschnitt (103), unter Verwendung eines maschinellen Lernalgorithmus;
*Identifizieren* (207, 504), durch die Prozessorvorrichtung (602), des mindestens einen luftwiderstandsbeeinflussenden Abschnitts (103) in dem mindestens einen Bild;
*Kombinieren,* durch die Prozessorvorrichtung (602), von Luftwiderstandsdaten für das Fahrzeug (100) und Luftwiderstandsdaten für den mindestens einen luftwiderstandsbeeinflussenden Abschnitt (103), wobei die Luftwiderstandsdaten unter Verwendung des maschinellen Lernalgorithmus bestimmt werden; und
*Schätzen* (207, 505), durch die Prozessorvorrichtung (602), einer Auswirkung, die der mindestens eine luftwiderstandsbeeinflussende Abschnitt (103) auf den Luftwiderstand und den Energieverbrauch des Fahrzeugs hat, basierend auf den kombinierten Luftwiderstandsdaten.

3. Computerimplementiertes Verfahren nach Anspruch 2, umfassend:
*Bestimmen* (506), durch die Prozessorvorrichtung (602), einer Änderung einer Fahrzeugeinstellung basierend auf der Auswirkung, die der mindestens eine luftwiderstandsbeeinflussende Abschnitt (103) auf den Luftwiderstand und den Energieverbrauch des Fahrzeugs hat, wobei die bestimmte Änderung mit einem verringerten Luftwiderstand und einem verringerten Energieverbrauch verknüpft ist.

4. Computerimplementiertes Verfahren nach einem der Ansprüche 2 bis 3, wobei der maschinelle Lernalgorithmus unter Verwendung von Daten und anderen Bildern von anderen Fahrzeugen (100) mit unterschiedlicher Fahrzeugeinstellung in Kombination mit bekanntem Luftwiderstand vorab trainiert ist.

5. Computerimplementiertes Verfahren nach einem der Ansprüche 2 bis 4, ferner umfassend:
*Bestimmen* (501), durch die Prozessorvorrichtung (602), dass eine Qualität des mindestens einen Bildes unter einer Qualitätsschwelle liegt oder dass diese die Qualitätsschwelle erreicht hat oder darüber liegt.

6. Computerimplementiertes Verfahren nach einem der Ansprüche 2 bis 5, ferner umfassend:
wenn eine Vielzahl von Bildern erhalten wird, *Bestimmen* (502), durch die Prozessorvorrichtung (602), dass eine Quantität der Vielzahl von Bildern unter einer Quantitätsschwelle liegt oder dass diese die Quantitätsschwelle erreicht hat oder darüber liegt.

7. Computerimplementiertes Verfahren nach einem der Ansprüche 2 bis 6, umfassend:
*Bereitstellen* (507), durch die Prozessorvorrichtung (602), von Informationen, die mit der geschätzten Auswirkung und dem geschätzten Luftwiderstand verknüpft sind, an eine Anzeigeeinheit.

8. Computerimplementiertes Verfahren nach einem der Ansprüche 2 bis 7, wobei das mindestens eine Bild von einer Bilderfassungsvorrichtung erhalten wird, die sich außerhalb des Fahrzeugs (100) befindet.

9. Fahrzeug (100), umfassend eine Prozessorvorrichtung (602), um das Verfahren nach einem der Ansprüche 2 bis 8 durchzuführen.

10. Computerprogrammprodukt, umfassend Programmcode zum Durchführen, wenn er durch eine Prozessorvorrichtung (602) ausgeführt wird, des Verfahrens nach einem der Ansprüche 2 bis 8.

11. Steuersystem, umfassend eine oder mehrere Steuereinheiten (101), die konfiguriert sind, um das Verfahren nach einem der Ansprüche 2 bis 8 durchzuführen.

12. Nichtflüchtiges, computerlesbares Speichermedium, umfassend Anweisungen, die, wenn sie durch eine Prozessorvorrichtung (602) ausgeführt werden, die Prozessorvorrichtung (602) veranlassen, das Verfahren nach einem der Ansprüche 2 bis 8 durchzuführen.

## Revendications

1. Système informatique (600) comprenant un dispositif processeur (602) configuré pour :
obtenir au moins une image d'un véhicule (100), dans lequel l'au moins une image comprend au moins une partie affectant la traînée aérodynamique (103) du véhicule (100) affectant la traînée aérodynamique du véhicule (100) ;
estimer une traînée aérodynamique du véhicule (100) comprenant l'au moins une partie affectant la traînée aérodynamique (103) à l'aide d'un algorithme d'apprentissage automatique ;
identifier l'au moins une partie affectant la traînée aérodynamique (103) dans l'au moins une image ;
combiner, par le dispositif processeur (602), des données de résistance à la traînée aérodynamique pour le véhicule (100) et des données de résistance à la traînée aérodynamique pour l'au moins une partie affectant la traînée aérodynamique (103), les données de résistance à la traînée aérodynamique étant déterminées à l'aide de l'algorithme d'apprentissage automatique et de l'au moins une image ;
et
estimer un impact que l'au moins une partie affectant la traînée aérodynamique (103) a sur la traînée aérodynamique et la consommation d'énergie du véhicule en fonction des données de résistance à la traînée aérodynamique combinées.

2. Procédé implémenté par ordinateur, comprenant :
l'*obtention* (201, 500), par un dispositif processeur (602) d'un système informatique (600), d'au moins une image d'un véhicule (100), dans lequel l'au moins une image comprend au moins une partie affectant la traînée aérodynamique (103) du véhicule (100) affectant la traînée aérodynamique du véhicule (100) ;
l'*estimation* (205, 205a, 205b, 503), par le dispositif processeur (602), d'une traînée aérodynamique du véhicule (100) comprenant l'au moins une partie affectant la traînée aérodynamique (103) à l'aide d'un algorithme d'apprentissage automatique ;
l'*identification* (207, 504), par le dispositif processeur (602), de l'au moins une partie affectant la traînée aérodynamique (103) dans l'au moins une image ;
la *combinaison,* par le dispositif processeur (602), de données de résistance à la traînée aérodynamique pour le véhicule (100) et de données de résistance à la traînée aérodynamique pour l'au moins une partie affectant la traînée aérodynamique (103), les données de résistance à la traînée aérodynamique étant déterminées à l'aide de l'algorithme d'apprentissage automatique ; et
l'*estimation* (207, 505), par le dispositif processeur (602), d'un impact que l'au moins une partie affectant la traînée aérodynamique (103) a sur la traînée aérodynamique et la consommation d'énergie du véhicule en fonction des données de résistance à la traînée aérodynamique combinées.

3. Procédé implémenté par ordinateur selon la revendication 2, comprenant :
la *détermination* (506), par le dispositif processeur (602), d'un changement de configuration de véhicule en fonction de l'impact que l'au moins une partie affectant la traînée aérodynamique (103) a sur la traînée aérodynamique et la consommation d'énergie du véhicule, dans lequel le changement déterminé est associé à une traînée aérodynamique réduite et à une consommation d'énergie réduite.

4. Procédé implémenté par ordinateur selon l'une quelconque des revendications 2 à 3, dans lequel l'algorithme d'apprentissage automatique est pré-entraîné à l'aide de données et d'autres images d'autres véhicules (100) avec une configuration de véhicule différente en combinaison avec une traînée aérodynamique connue.

5. Procédé implémenté par ordinateur selon l'une quelconque des revendications 2 à 4, comprenant en outre :
la *détermination* (501), par le dispositif processeur (602), qu'une qualité de l'au moins une image est inférieure à un seuil de qualité ou qu'elle a atteint ou est au-dessus du seuil de qualité.

6. Procédé implémenté par ordinateur selon l'une quelconque des revendications 2 à 5, comprenant en outre :
lorsqu'une pluralité d'images est obtenue, la *détermination* (502), par le dispositif processeur (602) qu'une quantité de la pluralité d'images est inférieure à un seuil de quantité ou qu'elle a atteint ou est au-dessus du seuil de quantité.

7. Procédé implémenté par ordinateur selon l'une quelconque des revendications 2 à 6, comprenant :
la *fourniture* (507), par le dispositif processeur (602), d'informations associées à l'impact estimé et à la traînée aérodynamique estimée à une unité d'affichage.

8. Procédé implémenté par ordinateur selon l'une quelconque des revendications 2 à 7, dans lequel l'au moins une image est obtenue à partir d'un dispositif de capture d'image non embarqué dans le véhicule (100).

9. Véhicule (100) comprenant un dispositif processeur (602) pour mettre en œuvre le procédé selon l'une quelconque des revendications 2 à 8.

10. Produit programme informatique comprenant un code de programme permettant de mettre en œuvre, lorsqu'il est exécuté par un dispositif processeur (602), le procédé selon l'une quelconque des revendications 2 à 8.

11. Système de commande comprenant une ou plusieurs unités de commande (101) configurées pour mettre en œuvre le procédé selon l'une quelconque des revendications 2 à 8.

12. Support de stockage non transitoire lisible par ordinateur comprenant des instructions qui, lorsqu'elles sont exécutées par un dispositif processeur (602), amènent le dispositif processeur (602) à mettre en œuvre le procédé selon l'une quelconque des revendications 2 à 8.
